# EUROPÄISCHE PATENTSCHRIFT

(11) **EP 1 473 277 B1**
(45) Veröffentlichungstag und Bekanntmachung des Hinweises auf die Patenterteilung: **11.03.2009**
(21) Anmeldenummer: 04006346.3
(22) Anmeldetag: 17.03.2004
(51) Int. Cl.: C01G 23/00, H01M 4/48

(54) **Verfahren zur Herstellung von nanokristallinen Lithiumtitanat-Spinellen**
Process for preparing nanocrystalline lithium titanate spinels
Procédé de préparation de spinels de lithium de titanate nanocristallines

(30) Priorität: 29.04.2003 DE 10319464
(43) Veröffentlichungstag der Anmeldung: 03.11.2004
(73) Patentinhaber: BASF SE, 67056 Ludwigshafen (DE)
(72) Erfinder: Sterzel, Hans-Josef, Dr., 67125 Dannstadt-Schauernheim (DE)

(56) Entgegenhaltungen:
- US-A1- 2002 102 205
- KAVAN, LADISLAV ET AL: "Facile synthesis of nanocrystalline Li4Ti5O12 (spinel) exhibiting fast Li insertion" ELECTROCHEMICAL AND SOLID-STATE LETTERS , 5(2), A39-A42 CODEN: ESLEF6; ISSN: 1099-0062, 2002, XP002283044
- ROBERTSON A D ET AL: "New inorganic spinel oxides for use as negative electrode materials in future lithium-ion batteries" JOURNAL OF POWER SOURCES, ELSEVIER SEQUOIA S.A. LAUSANNE, CH, Bd. 81-82, September 1999 (1999-09), Seiten 352-357, XP004363177 ISSN: 0378-7753

## Beschreibung

Die vorliegende Erfindung betrifft ein Verfahren zur Herstellung von nanokristallinen Lithiumtitanat-Spinellen durch Umsetzung von Lithiumhydroxid und Titanalkoholaten in einem Reaktionswasser bildenden Reaktionsgemisch bei erhöhter Temperatur.

Aus Elektrochemical and Solid-State Letters (2002), 5(2), A39-A42 ist die Herstellung von nanokristallinen Lithiumtitanat-Spinellen durch Umsetzung von Lithiumethoxid und Titan(IV)alkoxiden durch die Sol-Gel-Methode bei erhöhter Temperatur bekannt.

Nachteilig an diesen Verfahren ist das entstehende Gel und dessen Aufarbeitung.

Der vorliegenden Erfindung lag daher die Aufgabe zugrunde, den zuvor genannten Nachteilen abzuhelfen.

Demgemäß wurde ein neues und verbessertes Verfahren zur Herstellung von nanokristallinen Lithiumtitanat-Spinellen gefunden, welches dadurch gekennzeichnet ist, daß man Lithiumhydroxid und Titanalkoholat in einem Reaktionswasser bildenden Reaktionsgemisch enthaltend Alkohol oder Glykolether oder deren Gemische und eine Carbonsäure oder Carbonsäuregemische, bei erhöhter Temperatur umsetzt.

Das erfindungsgemäße Verfahren lässt sich wie folgt durchführen:

Man kann die erste Komponente für die Reaktionswasser bildende Reaktion, das Titanalkoholat und Lithiumhydroxid vorlegen und anschließend die zweite Komponente für die Reaktionswasser bildende Reaktion zugeben und unter erhöhter Temperatur, in der Regel 50 bis 180°C, bevorzugt 60 bis 150°C, besonders bevorzugt 70 bis 140°C, mit der Maßgabe, daß die Temperaturobergrenze von der Rückflusstemperatur des gesamten Reaktionsgemisches bestimmt ist, und einem Druck von 0,1 bis 3 bar, bevorzugt 0,5 bis 2 bar, besonders bevorzugt bei Atmosphärendruck (Normaldruck) die Umsetzung vollenden.

Der erhaltene Feststoff, die nanokristallinen Lithiumtitanat-Partikel, werden in der Regel durch Eindampfen der Reaktionsmischung und anschließende Trocknung, bevorzugt Sprühtrocknung isoliert.

Das Molverhältnis von Titanalkoholat zu der ersten Komponente für die Reaktionswasser bildende Reaktion liegt in der Regel bei 0,8:1 bis 50:1, bevorzugt bei 0,95:1 bis 10:1, besonders bevorzugt bei 1:1 bis 5:1, insbesondere bei 1:1 bis 3:1. Das Molverhältnis der ersten zur zweiten Komponente für die Reaktionswasser bildende Reaktion liegt in der Regel bei 3:1 bis 0,95:1, bevorzugt bei 2,5:1 bis 1:1, besonders bevorzugt bei 1:1 bis 1,5:1.

Das Reaktionswasser bildende Reaktionsgemisch enthält erfindungsgemäß Alkohol oder Glykolether oder deren Gemische und eine Carbonsäure oder Carbonsäuregemische.

Im Falle einer Veresterungsreaktion als Quelle des Reaktionswassers ist bevorzugt, die Alkoholkomponente als erste Komponente vorzulegen beispielsweise zusammen mit dem Titanalkoholat und ggf. dem Lithiumhydroxid und als zweite Komponente eine organische Säure der Mischung aus den zuvor genannten drei (3) Komponenten zuzusetzten, bevorzugt zuzutropfen.

Lithiumhydroxid kann in fester Form beispielsweise als Pulver, Kugeln, Pellets oder in beliebigen anderen Formen eingesetzt werden. Das eingesetzte Lithiumhydroxid ist in der Regel trocken oder wasserfrei, d.h. es werden keine wäßrigen Lithiumhydroxid-Lösungen eingesetzt und es wird auch kein Wasser zugesetzt.

Als Titanalkoholate eignen sich beispielsweise Titantetramethanolat, Titantetraethanolat, Titantetra-n-propanolat, Titantetra-iso-propanolat, Titantetra-n-butanolat, Titantetra-iso-butanolat, Titantetra-sec.-butanolat, Titantetra-tert.-butanolat, Titantetra-n-pentanolat und Titantetra-iso-pentanolat, bevorzugt Titantetraethanolat, Titantetra-n-propanolat, Titan-butanolat, Titantetra-sec.-butanolat und Titantetra-tert.-butanolat, besonders bevorzugt Titantetra-n-propanolat, Titan-tetra-iso-propanolat, Titantetra-n-butanolat und Titrantetraiso-butanolat oder deren Gemische.

Als erste Komponente für die Reaktionswasser bildende Reaktion eignen sich besonders aliphatische Alkohole, Etheralkohole oder deren Gemische mit einem Siedepunkt unterhalb von ca. 300°C unter Normaldruck. Diese können wasserfrei oder bevorzugt in handelsüblicher nicht wasserfreier Form eingesetzt werden, jedoch wird kein zusätzliches Wasser zugegeben.

Als Alkohole eignen sich C₁- bis C_{B}-Alkanole, bevorzugt C₁- bis C₄-Alkanole wie Methanol, Ethanol, n-Propanol, Iso-Propanol, n-Butanol, iso-Butanol, sec.-Butanol oder tert.-Butanol, besonders bevorzugt C₁- bis C₃-Alkanol wie Methanol, Ethanol, n-Propanol oder Iso-Propanol, insbesondere Methanol oder Ethanol.

Als Etheralkohole eignen sich alle bekannten Glykolether wie beispielsweise Ethylenglykol-mono-methylether, Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mino-methylether, Diethylenglykol-mono-ethylether, Diethylenglykol-mono-n-propylether, Diethylenglykol-mono-iso-propylether, Diethylenglykol-mono-n-butylether, Diethylenglykol-mono-iso-butylether, Diethlyenglykol-mono-sec.-butylether, Diethylenglykol-tert.-butylether, bevorzugt Ethylenglykol-mono-ethylether, Ethylenglykol-mono-n-propylether, Ethylenglykol-mono-iso-propylether, Ethylenglykol-mono-n-butylether, Ethylenglykol-mono-iso-butylether, Ethylenglykol-mono-sec.-butylether, Ethylenglykol-tert.-butylether, Diethylenglykol-mono-ethylether, Diethylenglykol-mono-n-propylether, Diethlyenglykol-mono-iso-propylether, Diethylenglykol-mono-n-butylether, Diethylenglykol-mono-iso-butylether, Diethylengykol-mono-sec.-butylether und Diethylenglykol-tert.-butylether, besonders bevorzugt Ethylenglykol-mono-n-propylether, Ethylenglykol-mono-iso-propylether, Ethylenglykol-mono-n-butylether, Ethylenglykol-mono-iso-butylether, Ethylenglykol-mono-see.-butylether, Ethylenglykol-tert.-butylether, Diethylenglykol-mono-n-propylether, Diethylenglykol-mono-iso-propylether, Diethylenglykol-mono-n-butylether, Diethylenglykol-mono-iso-butylether, Diethylenglykol-mono-sec.-butylether und Diethylenglykol-tert.-butylether, insbesondere Ethylenglykol-mono-iso-propylether, Ethylenglykol-mono-iso-butylether, Ethylenglykol-tert.-butylether, Diethylenglykol-mono-iso-propylether, Diethylenglykol-mono-iso-butylether und Diethylenglykol-tert.-butylether.

Als zweite Komponente für die Reaktionswasser bildende Reaktion werden Carbonsäuren, beispielsweise Ameisensäure, Essigsäure, Propionsaüre oder Orthocarbonsäuren wie Trimethylorthoformiat oder deren Gemische mit einem Siedepunkt unterhalb von ca. 300°C unter Normaldruck, eingesetzt. Diese können wasserfrei oder bevorzugt in handelsüblicher nicht wasserfreier Form eingesetzt werden, jedoch wird kein zusätzliches Wasser zugegeben.

Die erfindungsgemäß hergestellten nanokristallinen Lithiumtitanat-Spinelle haben in der Regel eine Partikelgröße von 1 bis 200 nm, bevorzugt 1 bis 50 nm, besonders bevorzugt 1 bis 20, insbesondere 1 bis 15 nm, insbesondere bevorzugt 1 bis 10 nm, ganz besonders bevorzugt 2 bis 8 nm.

Sie eignen sich als Anodenmaterial für wiederaufladbare Lithium-Batterien, bevorzugt als Anodenmaterial für wiederaufladbare Lithium-Batterien.

Zum Einsatz dieser nanokristallinen Lithiumtitanat-Spinelle als Anodenmaterial für wiederaufladbare Lithium-Batterien kann das Spinell-Material bei Temperaturen von 350 bis 700°C, bevorzugt 400 bis 690°C, bevorzugt 450 bis 680°C gesintert werden.

### Beispiele

### Beispiel 1

Unter Stickstoffatmosphäre wurden 110 g Butylglykol, 5 x 1/30 Mol, insgesamt 55,8 g Titantetrabutylat, 4 x 1/30 Mol, insgesamt 3,2 g wasserfreies Lithiumhydroxid, und 8 x 1/30 Mol, insgesamt 16,0 g Essigsäure, unter Rühren zugegeben und 24 h bei 120°C umgesetzt. Nach Abkühlung erhielt man eine weiße Suspension. Die Primärpartikelgröße des entstandenen Li₄Ti₅O₁₂ betrug 1-3 nm.

### Beispiel 1a

Ein Teil der in Beispiel 1 erhaltenen Suspension wurde getrocknet. Mittels einer Röntgenheizkamera wurde untersucht, ab welcher Temperatur die Verschmälerung der Röntgenreflexe eintritt, eine Temperatur, bei der im allgemeinen die Verfestigung des Materials eintritt. Im vorliegenden Beispiel liegt diese Temperatur im Bereich von 500 bis 600°C, während sich die kristalline Ordnung an sich ab ca. 400°C vervollkommt.

### Beispiel 2

Die Reaktion wurde analog Beispiel 1 durchgeführt, jedoch wurde 10 x 1/30 Mol Essigsäure eingesetzt. Die erhaltene Dispersion war viskoser als die von Beispiel 1. Die Primärpartikelgröße des entstandenen Li₄Ti₅O₁₂ betrug 1-3 nm. Die Primärpartikel waren jedoch zu größeren Aggregaten verbunden als bei Beispiel 1.

### Beispiel 3

Die Reaktion wurde analog Beispiel 1 durchgeführt, jedoch wurde 12 x 1/30 Mol Essigsäure eingesetzt. Die erhaltene Dispersion war viskoser als die von Beispiel 2. Die Primärpartikelgröße des entstandenen Li₄Ti₅O₁₂ betrug 2-4 nm. Die Primärpartikel waren jedoch zu größeren Aggregaten verbunden als bei Beispiel 2.

### Beispiel 4

Die Reaktion wurde analog Beispiel 1 durchgeführt, jedoch wurde 16 x 1/30 Mol Essigsäure eingesetzt. Die erhaltene Dispersion war viskoser als die von Beispiel 3. Die Primärpartikelgröße des entstandenen Li₄Ti₅O₁₂ betrug 2-4 nm. Die Primärpartikel waren jedoch zu größeren Aggregaten verbunden als bei Beispiel 3.

## Patentansprüche

1. Verfahren zur Herstellung von nanokristallinen Lithiumtitanat-Spinellen, **dadurch gekennzeichnet, daß** man Lithiumhydroxid und Titanalkoholat in einem Reaktionswasser bildenden Reaktionsgemisch, enthaltend Alkohol oder Glykolether oder deren Gemische und eine Carbonsäure oder Carbonsäuregemische, bei erhöhter Temperatur umsetzt.

2. Verfahren zur Herstellung von nanokristallinen Lithiumtitanat-Spinellen nach Anspruch 1, **dadurch gekennzeichnet, daß** man die Umsetzung bei einer Temperatur von 50 bis 180°C und einem Druck von 0,1 bis 3 bar durchführt.

3. Verfahren zur Herstellung von nanokristallinen Lithiumtitanat-Spinellen nach einem der Ansprüche 1 oder 2, **dadurch gekennzeichnet, daß** das Molverhältnis von Titanalkoholat zu der ersten Komponente für die Reaktionswasser bildende Reaktion 0,8:1 bis 50:1 beträgt.

4. Verfahren zur Herstellung von nanokristallinen Lithiumtitanat-Spinellen nach einem der Ansprüche 1 bis 3, **dadurch gekennzeichnet, daß** das Molverhältnis von erster zu zweiter Komponente für die Reaktionswasser bildende Reaktion 3:1 bis 0,95:1 beträgt.

5. Verfahren zur Herstellung von nanokristallinen Lithiumtitanat-Spinellen nach einem der Ansprüche 1 bis 4, **dadurch gekennzeichnet, daß** man die Spinelle bei 350 bis 700°C sintert.

6. Verfahren zur Herstellung von nanokristallinen Lithiumtitanat-Spinellen nach einem der Ansprüche 1 bis 5, **dadurch gekennzeichnet, daß** die Partikelgröße 1 bis 200 nm beträgt.

## Claims

1. A process for preparing nanocrystalline lithium titanate spinels, which comprises reacting lithium hydroxide and a titanium alkoxide at elevated temperature in a reaction mixture which forms water of reaction and comprises alcohol or glycol ether or a mixture thereof and a carboxylic acid or carboxylic acid mixture.

2. The process for preparing nanocrystalline lithium titanate spinels according to claim 1, wherein the reaction is carried out at from 50 to 180°C and a pressure of from 0.1 to 3 bar.

3. The process for preparing nanocrystalline lithium titanate spinels according to claim 1 or 2, wherein the molar ratio of titanium alkoxide to the first component for the reaction forming water of reaction is from 0.8:1 to 50:1.

4. The process for preparing nanocrystalline lithium titanate spinels according to any of claims 1 to 3, wherein the molar ratio of the first component to the second component for the reaction forming water of reaction is from 3:1 to 0.95:1.

5. The process for preparing nanocrystalline lithium titanate spinels according to any of claims 1 to 4, wherein the spinels are sintered at from 350 to 700°C.

6. The process for preparing nanocrystalline lithium titanate spinels according to any of claims 1 to 5, wherein the particle size is from 1 to 200 nm.

## Revendications

1. Procédé de fabrication de spinelles de titanate de lithium nanocristallins, **caractérisé en ce que** de l'hydroxyde de lithium et de l'alcoolate de titane sont mis en réaction à température élevée dans un mélange réactionnel formant une eau de réaction, contenant un alcool ou un éther de glycol ou leurs mélanges et un acide carboxylique ou des mélanges d'acides carboxyliques.

2. Procédé de fabrication de spinelles de titanate de lithium nanocristallins selon la revendication 1, **caractérisé en ce que** la réaction est réalisée à une température de 50 à 180 °C et une pression de 0,1 à 3 bars.

3. Procédé de fabrication de spinelles de titanate de lithium nanocristallins selon l'une quelconque des revendications 1 ou 2, **caractérisé en ce que** le rapport molaire entre l'alcoolate de titane et le premier composant pour la réaction formant l'eau de réaction est de 0,8:1 à 50:1.

4. Procédé de fabrication de spinelles de titanate de lithium nanocristallins selon l'une quelconque des revendications 1 à 3, **caractérisé en ce que** le rapport molaire entre le premier et le second composant pour la réaction formant l'eau de réaction est de 3:1 à 0,95:1.

5. Procédé de fabrication de spinelles de titanate de lithium nanocristallins selon l'une quelconque des revendications 1 à 4, **caractérisé en ce que** les spinelles sont frittés à 350 à 700°C.

6. Procédé de fabrication de spinelles de titanate de lithium nanocristallins selon l'une quelconque des revendications 1 à 5, **caractérisé en ce que** la taille de particule est de 1 à 200 nm.
